# FASCICULE DE BREVET EUROPEEN

(11) **EP 2 851 651 B1**
(45) Date de publication et mention de la délivrance du brevet: **05.10.2016**
(21) Numéro de dépôt: 14185592.4
(22) Date de dépôt: 19.09.2014
(51) Int. Cl.: G01C 5/00, B64D 43/00, G01C 23/00, G01D 13/02

(54) **Système d'affichage d'informations d'aide à la navigation d'un aéronef et écran primaire de vol pour un aéronef**
System zum Anzeigen von Hilfsinformationen für die Navigation eines Luftfahrzeugs, und Primär-Flugbildschirm für ein Luftfahrzeug
Information display system for navigation assistance of an aircraft and primary flight screen for an aircraft

(30) Priorité: 20.09.2013 FR 1302194
(43) Date de publication de la demande: 25.03.2015
(73) Titulaire: Thales, 92200 Neuilly Sur Seine (FR)
(72) Inventeur: Aymeric, Bruno, 33187 LE HAILLAN (FR); Servantie, Xavier, 33187 LE HAILLAN (FR); Andre, Cécile, 33187 LE HAILLAN (FR)
(74) Mandataire: Lavoix

(56) Documents cités:
- EP-A2- 2 568 256
- FR-A1- 2 801 966
- US-A- 2 717 378
- US-A- 5 844 504

## Description

La présente invention concerne un système d'affichage d'informations d'aide à la navigation d'un aéronef.

Plus particulièrement, l'invention se rapporte à un tel système d'affichage d'informations d'aide à la navigation d'un aéronef, du type comprenant un écran d'affichage comportant au moins une première zone d'affichage permettant d'afficher en outre :
- une première échelle d'altitude comportant des graduations ;
- l'altitude courante de l'aéronef sur la première échelle ;
- une altitude de consigne.

La présente invention concerne également un écran primaire de vol d'un aéronef.

Le domaine du pilotage et plus particulièrement le suivi de l'altitude d'un aéronef a des multiples liens avec des altitudes caractéristiques.

Parmi ces altitudes caractéristiques, on peut citer par exemple l'altitude sélectionnée par le plan de vol, les altitudes de réductions de poussée, les contraintes d'altitudes sur le plan de vol et autres.

Lors d'un vol, la situation verticale de l'aéronef est surveillée généralement par le pilote. En plus de l'altitude courante de l'aéronef, cette situation verticale est relative à divers autres éléments.

Ces éléments comprennent par exemple le plan de vol inséré dans le système de gestion de vol (FMS pour « Flight Management System » en anglais) et le profil vertical calculé par ce système. Le profil vertical prend par exemple en compte des contraintes d'altitude sur certains points. Ces contraintes doivent être respectées.

Les éléments de la situation verticale peuvent comprendre également l'altitude de consigne, transmise par le contrôle aérien. Cette consigne prend le pas sur toutes les autres contraintes qui pourraient avoir été intégrées dans le plan de vol.

Les éléments de la situation verticale peuvent comprendre également des informations sur le terrain survolé. Cet élément n'est pas fondamental car les procédures suivies au cours du vol et les instructions du contrôle aérien sont censées assurer la séparation de l'aéronef et du sol. Cependant, à des fins de surveillance (en particulier en cas où une erreur ou une défaillance survient), la situation de l'aéronef par rapport au terrain a un intérêt certain.

Finalement, les éléments de la situation verticale peuvent comprendre les capacités de montée ou de descente de l'aéronef. La poussée disponible des moteurs fixe la capacité de montée. La nécessité de maintenir une vitesse particulière fixe la capacité à descendre. Ainsi, le respect ou le non-respect d'une altitude de contrainte peut être anticipé au regard du gradient de montée ou de descente que l'aéronef pourra effectivement supporter.

Différents systèmes d'affichage d'un ou de plusieurs de ces éléments existent dans l'état de la technique, comme illustrée par le document US5844504.

Ainsi, par exemple, le système d'affichage intégré dans l'écran primaire de vol (PFD pour « Primary Flight Display » en anglais) de nombreux aéronefs comporte au moins une échelle d'altitude apte à afficher l'altitude courante de cet aéronef.

Une telle échelle est affichée verticalement sur l'écran primaire de vol et comporte des graduations distribuées uniformément le long de cette échelle.

De manière générale, l'échelle est centrée autour de l'altitude courante de l'aéronef avec une partie visible sur l'écran s'étendant jusqu'à 1000 ft au-dessus et 1000 ft au-dessous de cette altitude courante.

Cette partie visible correspond donc à l'extension de l'échelle autour de l'altitude courante.

Le système d'affichage est également apte à afficher sur une telle échelle, certains autres éléments de la situation verticale de l'aéronef comme par exemple l'altitude de consigne.

Ainsi, l'altitude de consigne correspond par exemple à une graduation de cette échelle indiquée par un indicateur adapté.

Cependant cette solution présente un certain nombre d'inconvénients.

En particulier, à cause de l'extension de l'échelle relativement faible, un tel système d'affichage ne permet pas d'afficher une altitude de consigne si celle-ci est trop éloignée de l'altitude courante.

Notamment, dans l'exemple présenté ci-dessus, l'extension de l'échelle correspond à 1000 ft et si la valeur absolue de la différence entre l'altitude courante et l'altitude de consigne est supérieure à 1000 ft, le système d'affichage ne permet plus d'afficher l'altitude de consigne sur l'échelle.

Dans ce cas, même si généralement la valeur numérique de l'altitude de consigne reste visible sur l'écran primaire, l'absence de l'indication correspondante sur l'échelle ne permet pas au pilote de savoir d'un coup d'oeil si cette altitude de consigne est éloignée ou proche de l'altitude courante.

La présente invention a pour but de remédier à ces inconvénients.

A cet effet, l'invention a pour objet un système d'affichage d'informations d'aide à la navigation d'un aéronef, du type précité dans lequel :
- les graduations de la première échelle sont distribuées sur un arc d'un premier disque comportant une première aiguille centrée dans ce disque et destinée à indiquer l'altitude courante sur la première échelle, et
- la distribution des graduations sur ledit arc est non-linéaire et symétrique par rapport à une graduation correspondant à l'altitude de consigne et définit des graduations d'extensions décroissantes à partir de celle-ci.

Selon des modes particuliers de réalisation de l'invention, le système comporte l'une ou plusieurs des caractéristiques suivantes :
- la graduation correspondant à l'altitude de consigne est située sur l'axe horizontal passant par le centre du premier disque ;
- l'écran d'affichage comporte une deuxième zone d'affichage permettant d'afficher une deuxième échelle d'altitude comportant des graduations distribuées sur la périphérie d'un deuxième disque, ce deuxième disque comportant une deuxième aiguille destinée à préciser l'indication de la première aiguille entre deux graduations de la première échelle ;
- le diamètre du deuxième disque est inférieur au diamètre du premier disque, et en ce que le deuxième disque est placé au centre du premier disque ;
- l'écran d'affichage comporte une troisième zone d'affichage permettant d'afficher un chiffre correspondant à l'altitude courante de l'aéronef, à l'intérieur du deuxième disque ;
- la différence entre deux graduations voisines de la première échelle et le tour complet de la deuxième aiguille dans le deuxième disque correspondent à un changement d'altitude de l'aéronef de 1000 ft ;
- l'écran d'affichage comporte une quatrième zone d'affichage située entre le premier disque et le deuxième disque et permettant d'afficher des points de cheminement de la trajectoire prévue par le plan de vol de l'aéronef à partir de sa position courante, situés à une distance horizontale inférieure à une distance de visibilité prédéterminée ;
- la distance de visibilité est égale à 10 Nm ;
- chaque point de cheminement est affiché sur un rayon du premier disque correspondant à l'altitude prévue de passage en ce point ;
- la distance radiale entre le premier disque et le deuxième disque représente la distance de visibilité ;
- la distance radiale entre le point affiché et la périphérie du premier disque représente la distance horizontale entre l'aéronef et le point de cheminement ;
- le plan de vol est fourni par le système de gestion de vol (FMS) et comporte des informations sur le terrain survolé ;
- le système de gestion de vol (FMS) est adapté pour modifier l'affichage d'un point de cheminement si une contrainte d'altitude de passage pèse sur ce point ;
- le système de gestion de vol (FMS) est adapté pour modifier l'affichage d'un point de cheminement si la prévision d'une trajectoire réelle de l'aéronef est incompatible d'une contrainte d'altitude de passage en ce point ;
- l'écran d'affichage comporte une zone d'affichage permettant d'afficher la capacité maximale de montée de l'aéronef à partir de sa position courante ;
- l'écran d'affichage comporte une zone d'affichage permettant d'afficher la capacité maximale de descente de l'aéronef à partir de sa position courante ; et
- la ou chaque capacité est calculée par le système de gestion de vol (FMS).

L'invention a également pour objet un écran primaire de vol d'un aéronef comportant un système d'affichage tel que décrit ci-dessus.

L'invention sera mieux comprise à la lecture de la description qui va suivre, donnée uniquement à titre d'exemple et faite en se référant au dessin annexé qui représente une vue schématique d'un système d'affichage d'informations d'aide à la navigation d'un aéronef selon l'invention.

On a en effet illustré sur la figure annexée un système d'affichage d'informations d'aide à la navigation d'un aéronef selon l'invention.

Ce système d'affichage est désigné par la référence générale 10 sur cette figure.

Le système d'affichage 10 comporte un écran d'affichage 11 intégré par exemple dans un écran primaire de vol PFD (pour « Primary Flight Display » en anglais).

Un tel écran PFD fait partie du cockpit d'un aéronef et comporte généralement des informations essentielles servant au pilotage et à la navigation de l'aéronef.

Ainsi, cet écran PFD est placé par exemple dans une position centrale devant le ou chaque poste de pilotage.

En effet, pour un cockpit d'un aéronef comportant plusieurs postes de pilotage, un écran PFD est placé devant chaque poste de pilotage.

L'écran d'affichage 11 comporte par exemple cinq zones d'affichage. Ces zones d'affichage sont désignées sur la figure annexée par les références générales 21, 22, 23, 24 et 25.

Les trois premières zones d'affichage 21, 22 et 23 permettent d'afficher des informations liées à la position verticale courante de l'aéronef.

Cette position verticale courante est caractérisée par exemple par l'altitude courante de l'aéronef.

A cet effet, le système 10 est relié à des moyens de mesure de l'altitude désignés par la référence générale 32 sur cette figure.

Ces moyens 32 sont par exemple représentés par un instrument apte à mesurer la pression statique à l'extérieur de l'aéronef et à la comparer avec une pression de référence.

Bien entendu tout autre système peut être envisagé.

La position verticale courante de l'aéronef est également caractérisée par une altitude de consigne.

Cette altitude de consigne est transmise par exemple par le contrôle aérien et doit être respectée impérativement par le pilote.

A cet effet, le système 10 est relié à des moyens de fourniture de l'altitude de consigne désignés par la référence générale 34 sur cette figure.

Ces moyens 34 permettent par exemple au pilote ou au copilote d'introduire manuellement dans le système de gestion de vol de l'aéronef, une altitude de consigne reçue du contrôle aérien à travers des moyens de radiocommunication.

Plus précisément, la première zone 21 d'affichage est apte à afficher l'altitude courante sur une première échelle d'altitude comportant des graduations.

Les graduations sont distribuées sur un arc d'un premier disque désigné par la référence générale 36 sur la figure. L'ordre croissant de ces graduations correspond à la direction horaire du disque 36.

La longueur de l'arc est par exemple supérieure à la longueur du demi-cercle correspondant au disque 36.

La différence entre deux graduations voisines de la première échelle correspond par exemple à un changement d'altitude de l'aéronef de 1000 ft.

Ainsi, sur la figure, chaque graduation correspond à un nombre allant de « 5 » à « 20 ». Chaque nombre correspond donc au nombre de milliers contenu dans une altitude mesurée en pieds (ft).

La graduation correspondant à l'altitude de consigne est située par exemple sur l'axe horizontal passant par le centre du premier disque 36. Cet axe est désigné par la référence générale 38 sur la figure.

La première échelle est donc une échelle dynamique et apte à changer avec un changement de l'altitude de consigne.

Sur la figure, la graduation correspondant au nombre « 12 » est située sur l'axe 38 et l'altitude de consigne est égale à 12 000 ft.

La distribution des graduations sur l'arc du premier disque 36 est non-linéaire.

Elle est par ailleurs symétrique par rapport à la graduation correspondant à l'altitude de consigne et définit des graduations d'extensions décroissantes à partir de celle-ci.

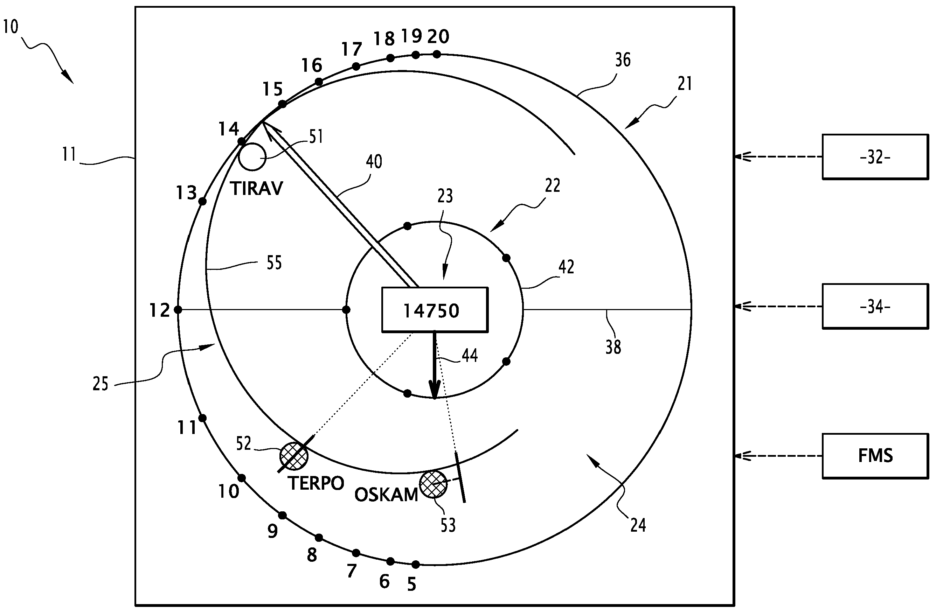

Ainsi, sur la figure 1, deux tronçons entre les graduations correspondant aux nombres « 13 » et « 12 » et aux nombres « 12 » et « 11 » sont des tronçons d'extension maximale.

La décroissance de la longueur des tronçons est définie par exemple par une loi logarithmique.

Le premier disque 36 comporte une première aguille désignée par la référence générale 40 sur la figure.

La première aguille 40 est centrée dans le disque 36 et est destinée à indiquer l'altitude courante de l'aéronef sur la première échelle.

Ainsi, sur la figure, la première aguille 40 indique l'altitude courante comprise entre 14 000 ft et 15 000 ft.

Cette indication de la première aguille 40 est apte à être précisée par des informations contenues dans la deuxième zone d'affichage 22.

Ainsi, la deuxième zone d'affichage permet d'afficher une deuxième échelle d'altitude.

Cette deuxième échelle comporte par exemple cinq graduations dont une est situé sur l'axe horizontal 38.

Les graduations sont distribuées uniformément sur la périphérie d'un deuxième disque, désigné par la référence générale 42 sur la figure.

Ce deuxième disque 42 est placé par exemple au centre du premier disque 36 et son diamètre est inférieur à celui du premier disque 36.

La différence entre deux graduations voisines de la deuxième échelle correspond par exemple à un changement d'altitude de l'aéronef de 200 ft.

Le deuxième disque 42 comporte une deuxième aguille désignée par la référence générale 44 sur la figure.

Cette aguille 44 est centrée dans le disque 42 et destinée à préciser l'indication de la première aguille 40 entre deux graduations voisines de la première échelle.

Ainsi, le tour complet de la deuxième aguille 44 correspond par exemple à un changement d'altitude de l'aéronef de 1 000 ft.

La position de la deuxième aiguille 44 indiquant la graduation située sur l'axe horizontal 38 correspond à la position de la première aguille 40 indiquant précisément une graduation de la première échelle.

Autrement dit, cette graduation située sur l'axe horizontal 38 est le point de référence. Le sens de rotation de l'aiguille 44 est par exemple horaire.

Ainsi, la position verticale de l'aguille 44 orientée vers le bas sur la figure correspond à la valeur de 750 ft.

En prenant en compte la position de la première aguille 40 entre les nombres « 14 » et « 15 », on peut conclure que l'altitude courante de l'aéronef est égale à 14 750 ft (14000 + 750).

La valeur exacte correspondant à l'altitude courante de l'aéronef est par ailleurs affichée dans la troisième zone d'affichage 23.

Cette zone d'affichage 23 est par exemple située dans la partie intérieure du deuxième disque 42 et est formée par exemple par un afficheur alphanumérique.

La quatrième zone d'affichage 24 permet d'afficher des informations de prévision de la position verticale de l'aéronef.

Ces informations incluent par exemple des points de cheminement de la trajectoire prévue par le plan de vol de l'aéronef.

Le plan de vol et fourni par exemple par le système de gestion de vol FMS (pour « Flight Management System » en anglais).

A cet effet, le système 10 est relié de façon classique au système FMS comme ceci est illustré sur la figure.

Plus précisément, la quatrième zone d'affichage 24 permet d'afficher des points de cheminement situés à une distance horizontale inférieure à une distance de visibilité prédéterminée et calculée à partir de la position courante de l'aéronef.

La distance radiale entre le premier disque 36 et le deuxième disque 42 représente la distance de visibilité.

Cette distance de visibilité prédéterminée est égale par exemple à 10 Nm.

Chaque point de cheminement est affiché sous la forme d'un plot en cercle placé sur un rayon du premier disque 36 correspondant à l'altitude de passage prévue par le plan de vol en ce point.

Chaque point de cheminement est affiché avec un nom correspond au nom de ce point cheminement sur le plan de vol.

De plus, chaque point de cheminement est affiché sur le rayon correspondant de telle sorte que la distance radiale entre ce point affiché et la périphérie du premier disque 36 représente la distance horizontale entre l'aéronef et ce point de cheminement.

Ainsi, par exemple, la quatrième zone d'affichage 24 illustrée sur la figure, comporte trois points de cheminement nommés dans le plan de vol « TIRAV », « TERPO » et « OSKAM » et désignés respectivement par les références générales 51, 52 et 53 sur cette figure.

Le point 51 est placé sur un rayon du premier disque correspondant approximativement à l'altitude de 14 000 ft, le point 52 sur un rayon correspondant approximativement à l'altitude de 9 500 ft et le point 53 sur un rayon correspondant approximativement à l'altitude de 4 500 ft.

Dans cette figure, le point de cheminement le plus proche à la position courante de l'aéronef est le point 51 avec une distance horizontale égale approximativement à 1 Nm.

Il est à remarquer que le système 10 a pour objectif de montrer juste visuellement la distance jusqu'à un point de cheminement et l'altitude de ce point sans fournir de valeurs exactes.

La quatrième zone d'affichage 24 permet également par exemple de faire apparaitre en liaison avec l'affichage des points de cheminement, certaines restrictions de passage éventuelles.

Ces restrictions de passage représentent par exemple une altitude minimale de passage ou d'autres restrictions pesant sur ce point de cheminement et concernant le terrain survolé.

En variante, un point de cheminement peut comporter des contraintes de vitesse de passage.

De telles contraintes sont issues par exemple du plan de vol et sont fournies au système 10 par exemple par le système FMS.

De plus, le système FMS est apte à comparer la prévision de la trajectoire réelle de l'aéronef avec ces contraintes de passage et dans le cas du non-respect de ces contraintes, de modifier l'affichage du point de cheminement correspondant.

Ainsi, par exemple, un point de cheminement avec une contrainte respectée d'altitude de passage est affiché avec un trait traversant ce point et orienté selon le rayon correspondant. Un point de cheminement avec une contrainte non-respectée d'altitude de passage est affiché par exemple avec un trait éloigné de ce point.

Sur la figure, la contrainte d'altitude réelle de passage dans le point 52 est respectée et dans le point 53 cette contrainte est non-respectée.

En particulier, sur cette figure, le rayon correspondant au point 53, représente l'altitude de contrainte et le rayon correspondant au trait, représente l'altitude de passage prévue. Le point 53 est donc situé à gauche du trait correspondant. Ceci signifie que l'altitude du point est supérieure à celle du trait.

La cinquième zone d'affichage 25 permet d'afficher des informations concernant des restrictions techniques de l'aéronef à changer sa position verticale.

Ces informations incluent par exemple des capacités maximales de l'aéronef de montée et de descente à partir de la position courante.

Les capacités maximales sont fournies et/ou calculées par un calculateur de l'aéronef et intégré par exemple dans le système de gestion de vol FMS.

Plus précisément, la cinquième zone d'affichage 25 permet d'afficher une courbe correspondant aux capacités maximales de montée et de descente de l'aéronef. Cette courbe est désignée par la référence générale 55 sur la figure.

Cette courbe 55 est apte à délimiter un ensemble de points accessibles à partir de la position courante de l'aéronef.

Ainsi, sur la figure, la partie de la courbe 55 s'étendant à partir de l'extrémité de la première aguille 40 dans le sens horaire montre la capacité maximale de montée de l'aéronef. Ainsi, l'ensemble des points situés entre cette courbe et le deuxième disque 42 est accessible pour l'aéronef si celui-ci monte à partir de la position courante.

De manière analogue, la partie de la courbe 55 s'étendant à partir de l'extrémité de la première aguille 40 dans le sens antihoraire montre la capacité maximale de descente de l'aéronef. Ainsi, l'ensemble des points situés entre cette courbe et le deuxième disque 42 est accessible pour l'aéronef si celui-ci descend à partir de la position courante.

Le système de gestion de vol FMS est par ailleurs apte à modifier l'affichage d'un point de cheminement si ce point est inaccessible en prenant en compte les capacités maximales réelles de montée ou de descente de l'aéronef à partir de la position courante.

Sur la figure, le point 51 est accessible et est affiché par un simple plot en cercle. Les points 52 et 53 sont inaccessibles et sont affichés par des plots en cercle hachurés.

Bien entendu d'autres modes de réalisation et d'autres façons de présenter ces différentes informations peuvent encore être envisagés.

L'avantage particulier de la présente invention concerne la possibilité d'afficher l'altitude courante sous la forme d'aiguilles tournantes tout en gardant la possibilité d'afficher d'autres éléments liés à la position verticale de l'aéronef, comme notamment l'altitude de consigne.

Les aiguilles tournantes permettent au pilote de contrôler visuellement le changement de la vitesse verticale de l'aéronef comme c'était le cas dans les anciens altimètres ronds.

Un autre avantage de la présente invention concerne la possibilité d'utiliser un tel système d'affichage avec un écran tactile.

En particulier, un écran tactile permettra au pilote de toucher une valeur particulière d'altitude (par exemple « 10 » sur la figure).

Le système pourra donc interpréter cela comme une demande d'information se rapportant à l'altitude 10 000 ft. Le FMS pourra fournir alors de diverses informations liées à cette altitude (par exemple distance/temps pour atteindre 10 000 ft avec les hypothèses actuelles, avec les performances maximales, en sortant les aérofreins, etc...)

## Revendications

1. Système d'affichage (10) d'informations d'aide à la navigation d'un aéronef, du type comprenant un écran (11) d'affichage comportant au moins une première zone (21) d'affichage permettant d'afficher en outre :
- une première échelle d'altitude comportant des graduations ;
- l'altitude courante de l'aéronef sur la première échelle ;
- une altitude de consigne ;
- les graduations de la première échelle sont distribuées sur un arc d'un premier disque (36) comportant une première aiguille (40) centrée dans ce disque (36) et destinée à indiquer l'altitude courante sur la première échelle, et **caractérisé en ce que**
- la distribution des graduations sur ledit arc est non-linéaire et symétrique par rapport à une graduation correspondant à l'altitude de consigne et définit des graduations d'extensions décroissantes à partir de celle-ci.

2. Système (10) selon la revendication 1, **caractérisé en ce que** la graduation correspondant à l'altitude de consigne est située sur l'axe horizontal (38) passant par le centre du premier disque.

3. Système (10) selon la revendication 1 ou 2, **caractérisé en ce que** l'écran d'affichage (11) comporte une deuxième zone (22) d'affichage permettant d'afficher une deuxième échelle d'altitude comportant des graduations distribuées sur la périphérie d'un deuxième disque (42), ce deuxième disque (42) comportant une deuxième aiguille (44) destinée à préciser l'indication de la première aiguille (40) entre deux graduations de la première échelle.

4. Système (10) selon la revendication 3, **caractérisé en ce que** le diamètre du deuxième disque (42) est inférieur au diamètre du premier disque (36), et **en ce que** le deuxième disque (42) est placé au centre du premier disque (36).

5. Système selon la revendication 3 ou 4, **caractérisé en ce que** l'écran d'affichage (11) comporte une troisième zone (23) d'affichage permettant d'afficher un chiffre correspondant à l'altitude courante de l'aéronef, à l'intérieur du deuxième disque (42).

6. Système (10) selon l'une quelconque des revendications 3 à 5, **caractérisé en ce que** la différence entre deux graduations voisines de la première échelle et le tour complet de la deuxième aiguille (44) dans le deuxième disque (42) correspondent à un changement d'altitude de l'aéronef de 1000 ft.

7. Système (10) selon l'une quelconque des revendications 3 à 6, **caractérisé en ce que** l'écran d'affichage (11) comporte une quatrième zone (24) d'affichage située entre le premier disque (36) et le deuxième disque (42) et permettant d'afficher des points de cheminement (51, 52, 53) de la trajectoire prévue par le plan de vol de l'aéronef à partir de sa position courante, situés à une distance horizontale inférieure à une distance de visibilité prédéterminée.

8. Système (10) selon la revendication 7, **caractérisé en ce que** la distance de visibilité est égale à 10 Nm.

9. Système (10) selon la revendication 7 ou 8, **caractérisé en ce que** :
- chaque point de cheminement (51, 52, 53) est affiché sur un rayon du premier disque (36) correspondant à l'altitude prévue de passage en ce point ;
- la distance radiale entre le premier disque (36) et le deuxième disque (42) représente la distance de visibilité ; et
- la distance radiale entre le point (51, 52, 53) affiché et la périphérie du premier disque (36) représente la distance horizontale entre l'aéronef et le point de cheminement (51, 52, 53).

10. Système (10) selon l'une quelconque des revendications 7 à 9, **caractérisé en ce que** le plan de vol est fourni par le système de gestion de vol (FMS) et comporte des informations sur le terrain survolé.

11. Système (10) selon la revendication 10, **caractérisé en ce que** le système de gestion de vol (FMS) est adapté pour modifier l'affichage d'un point de cheminement (51, 52, 53) si une contrainte d'altitude de passage pèse sur ce point (51, 52, 53).

12. Système (10) selon la revendication 11, **caractérisé en ce que** le système de gestion de vol (FMS) est adapté pour modifier l'affichage d'un point de cheminement (51, 52, 53) si la prévision d'une trajectoire réelle de l'aéronef est incompatible d'une contrainte d'altitude de passage en ce point (51, 52, 53).

13. Système (10) selon l'une quelconque des revendications précédentes, caractérisé ce que l'écran d'affichage (11) comporte une zone (25) d'affichage permettant d'afficher la capacité maximale de montée de l'aéronef à partir de sa position courante.

14. Système (10) selon l'une quelconque des revendications précédentes, caractérisé ce que l'écran d'affichage (11) comporte une zone (25) d'affichage permettant d'afficher la capacité maximale de descente de l'aéronef à partir de sa position courante.

15. Système (10) selon la revendication 13 ou 14, **caractérisé en ce que** la ou chaque capacité est calculée par le système de gestion de vol (FMS).

16. Écran primaire de vol (PFD) d'un aéronef, **caractérisé en ce qu'**il comporte un système d'affichage (1) selon l'une quelconque des revendications précédentes.

## Patentansprüche

1. System zur Anzeige (10) von Informationen zur Unterstützung für die Navigation eines Luftfahrzeugs, von der Art aufweisend einen Bildschirm (11) zur Anzeige, welcher wenigstens einen ersten Bereich (21) zur Anzeige aufweist, welcher es erlaubt, unter anderem anzuzeigen:
- eine erste Höhenskala, welche Unterteilungsstufen aufweist;
- die aktuelle Höhe des Luftfahrzeugs auf der ersten Skala;
- eine Sollhöhe;
- wobei die Unterteilungsstufen der ersten Skala verteilt sind auf einem Bogen einer ersten Scheibe (36), welche einen ersten Zeiger (40) aufweist, welcher auf dieser Scheibe (36) zentriert ist und dazu bestimmt ist, die momentane Höhe auf der ersten Skala anzugeben, und **gekennzeichnet dadurch, dass**
- die Verteilung der Unterteilungsstufen auf dem Bogen nichtlinear und symmetrisch bezüglich einer Unterteilungsstufe, welche einer Sollhöhe entspricht, ist und Unterteilungsstufen von von dieser aus abnehmenden Erstreckungen definiert.

2. System (10) gemäß dem Anspruch 1, **gekennzeichnet dadurch, dass** die Unterteilungsstufe, welche der Sollhöhe entspricht, auf der Horizontalachse (38), welche durch das Zentrum der ersten Scheibe verläuft, liegt.

3. System (10) gemäß dem Anspruch 1 oder 2, **gekennzeichnet dadurch, dass** der Bildschirm zur Anzeige (11) einen zweiten Bereich (22) zur Anzeige aufweist, welcher es erlaubt, eine zweite Höhenskala anzuzeigen, welche auf dem Umfang einer zweiten Scheibe (42) verteilte Unterteilungsstufen aufweist, wobei die zweite Scheibe (42) einen zweiten Zeiger (44) aufweist, welcher dazu bestimmt ist, die Angabe des ersten Zeigers (40) zwischen zwei Unterteilungsstufen der ersten Skala zu präzisieren.

4. System (10) gemäß dem Anspruch 3, **gekennzeichnet dadurch, dass** der Durchmesser der zweiten Scheibe (42) kleiner ist als der Durchmesser der ersten Scheibe (36), und dadurch, dass die zweite Scheibe (42) am Zentrum der ersten Scheibe (36) angeordnet ist.

5. System (10) gemäß dem Anspruch 3 oder 4, **gekennzeichnet dadurch, dass** der Bildschirm zur Anzeige (11) einen dritten Bereich (23) zur Anzeige, welcher es erlaubt, eine Ziffer, welche der aktuellen Höhe des Luftfahrzeugs entspricht, anzuzeigen, innerhalb der zweiten Scheibe (42) aufweist.

6. System (10) gemäß irgendeinem der Ansprüche 3 bis 5, **gekennzeichnet dadurch, dass** die Differenz zwischen zwei benachbarten Unterteilungsstufen der ersten Skala und eine vollständige Umdrehung des zweiten Zeigers (44) in der zweiten Scheibe (42) einer Höhenänderung des Luftfahrzeugs von 1000 ft entspricht.

7. System (10) gemäß irgendeinem der Ansprüche 3 bis 6, **gekennzeichnet dadurch, dass** der Bildschirm zur Anzeige (11) einen vierten Bereich (24) zur Anzeige aufweist, welcher zwischen der ersten Scheibe (36) und der zweiten Scheibe (42) angeordnet ist und es erlaubt, Wegpunkte (51, 52, 53) der durch den Flugplan des Luftfahrzeugs vorgesehenen Bahnkurve von dessen aktueller Position aus anzuzeigen, die in einer horizontalen Distanz, die kleiner als eine vorbestimmte Sichtweitendistanz ist, liegen.

8. System (10) gemäß Anspruch 7, **gekennzeichnet dadurch, dass** die Sichtweitendistanz gleich 10 Nm ist.

9. System (10) gemäß Anspruch 7 oder 8, **gekennzeichnet dadurch, dass**:
- jeder Wegpunkt (51, 52, 53) auf einem Radius der ersten Scheibe (36) angezeigt ist, welcher der vorgesehenen Durchreisehöhe an diesem Punkt entspricht,
- der radiale Abstand zwischen der ersten Scheibe (36) und der zweiten Scheibe (42) eine Sichtweitendistanz angibt, und
- der radiale Abstand zwischen dem angezeigten Punkt (51, 52, 53) und dem Umfang der ersten Scheibe (36) eine horizontale Distanz zwischen dem Luftfahrzeug und dem Wegpunkt (51, 52, 53) angibt.

10. System (10) gemäß irgendeinem der Ansprüche 7 bis 9, **gekennzeichnet dadurch, dass** der Flugplan durch das Flug-Managementsystem (FMS) geliefert ist und Informationen über das überflogene Terrain aufweist.

11. System (10) gemäß Anspruch 10, **gekennzeichnet dadurch, dass** das Flug-Managementsystem (FMS) dazu eingerichtet ist, die Anzeige eines Wegpunkts (51, 52, 53) zu modifizieren, wenn eine Durchreisehöhe-Beschränkung auf diesen Punkt auferlegt ist.

12. System (10) gemäß Anspruch 11, **gekennzeichnet dadurch, dass** das Flug-Managementsystem (FMS) dazu eingerichtet ist, die Anzeige eines Wegpunkts (51, 52, 53) zu modifizieren, wenn die Prognose einer realen Bahnkurve des Luftfahrzeugs inkompatibel mit einer Durchreisehöhe-Beschränkung in diesem Punkt (51, 52, 53) ist.

13. System (10) gemäß irgendeinem der vorhergehenden Ansprüche, **gekennzeichnet dadurch, dass** der Bildschirm zur Anzeige (11) einen Bereich (25) zur Anzeige aufweist, welcher es erlaubt, die maximale Fähigkeit zum Anstieg des Luftfahrzeugs von seiner momentanen Position aus anzuzeigen.

14. System (10) gemäß irgendeinem der vorhergehenden Ansprüche, **gekennzeichnet dadurch, dass** der Bildschirm zur Anzeige (11) einen Bereich (25) zur Anzeige aufweist, welcher es erlaubt, die maximale Fähigkeit zum Abstieg des Luftfahrzeugs von seiner momentanen Position aus anzuzeigen.

15. System (10) gemäß irgendeinem dem Anspruch 13 oder 14, **gekennzeichnet dadurch, dass** die oder jede Fähigkeit durch das Flug-Managementsystem (FMS) berechnet ist.

16. Primärer Flugbildschirm (PFD) eines Luftfahrzeugs, **gekennzeichnet dadurch, dass** er ein System zur Anzeige (1) gemäß irgendeinem der vorhergehenden Ansprüche aufweist.

## Claims

1. A system (10) for displaying information for navigational aid of an aircraft, of the type comprising a display screen (11) including at least one first display area (21) allowing further display of:
- a first altitude scale including graduations;
- the current altitude of the aircraft on the first scale;
- a set altitude value;
the graduations of the first scale are distributed on an arc of a first disc (36) including a first needle (40) centered in this disc (36) and intended to indicate the current altitude on the first scale, **characterized in that**:
- the distribution of the graduations on said arc is nonlinear and symmetrical relatively to a graduation corresponding to the set altitude value and defines extension graduations decreasing from the latter.

2. The system (10) according to claim 1, **characterized in that** the graduation corresponding to the set altitude value is located on the horizontal axis (38) passing through the centre of the first disc.

3. The system (10) according to claim 1 or 2, **characterized in that** the display screen (11) includes a second display area (22) allowing display of a second altitude scale including graduations distributed on the periphery of a second disc (42), this second disc (42) including a second needle (44) intended to specify the indication of the first needle (40) between two graduations of the first scale.

4. The system (10) according to claim 3, **characterized in that** the diameter of the second disc (42) is less than the diameter of the first disc (36), and **in that** the second disc (42) is placed at the centre of the first disc (36).

5. The system according to claim 3 or 4, **characterized in that** the display screen (11) includes a third display area (23) allowing display of a number corresponding to the current altitude of the aircraft, inside the second disc (42).

6. The system (10) according to any of claims 3 to 5, **characterized in that** the difference between two neighboring graduations of the first scale and the complete revolution of the second needle (44) in the second disc (42) corresponding to a change in altitude of the aircraft of 1,000 ft.

7. The system (10) according to any of claims 3 to 6, **characterized in that** the display screen (11) includes a fourth display area (24) located between the first disc (36) and the second disc (42) and allowing display of way points (51, 52, 53) of the trajectory provided by the flight plan of the aircraft from its current position, located at a horizontal distance of less than the predetermined visibility distance.

8. The system (10) according to claim 7, **characterized in that** the visibility distance is equal to 10 Nm.

9. The system (10) according to claim 7 or 8, **characterized in that**:
- each way point (51, 52, 53) is displayed on a radius of the first disc (36) corresponding to the intended passage altitude at this point;
- the radial distance between the first disc (36) and the second disc (42) represents the visibility distance; and
- the radial distance between the displayed point (51, 52, 53) and the periphery of the first disc (36) represents the horizontal distance between the aircraft and the way point (51, 52, 53).

10. The system (10) according to any of claims 7 to 9, **characterized in that** the flight plan is provided by the flight management system (FMS) and includes information on the overflown ground.

11. The system (10) according to claim 10, **characterized in that** the flight management system (FMS) is adapted so as to modify the display of a way point (51, 52, 53) if a passage altitude constraint is a burden on this point (51, 52, 53).

12. The system (10) according to claim 11, **characterized in that** the flight management system (FMS) is adapted so as to modify the display of a way point (51, 52, 53) if the prediction of an actual trajectory of the aircraft is incompatible with a passage altitude constraint in this point (51, 52, 53).

13. The system (10) according to any of the preceding claims, **characterized in that** the display screen (11) includes a display area (25) allowing display of the maximum ascent capability of the aircraft from its current position.

14. The system (10) according to any of the preceding claims, **characterized in that** the display screen (11) includes a display area (25) allowing display of the maximum descent capability of the aircraft from its current position.

15. The system (10) according to claim 13 or 14, **characterized in that** said or each capability is computed by the flight management system (FMS).

16. A primary flight display (PFD) of an aircraft, **characterized in that** it includes a display system (1) according to any of the preceding claims.
